# EUROPEAN PATENT APPLICATION

(11) **EP 2 581 354 A1**
(43) Date of publication of application: **17.04.2013**
(21) Application number: 12006993.5
(22) Date of filing: 09.10.2012
(51) Int. Cl.: C04B 35/195, C04B 35/18, C04B 35/185

(54) **Oxide ceramics sintered compact and method of manufacturing the same**

(30) Priority: 14.10.2011 JP 2011227236; 30.08.2012 JP 2012189788
(71) Applicant: Asahi Glass Company, Limited, Tokyo 100-8405 (JP)
(72) Inventor: Kawahara, Koji, Tokyo 100-8405 (JP); Arai, Kanji, Tokyo 100-8405 (JP); Ogawa, Tomonori, Tokyo 100-8405 (JP); Mitsui, Akira, Tokyo 100-8405 (JP)
(74) Representative: Müller-Boré & Partner Patentanwälte

(57) **Abstract**

An oxide ceramics sintered compact comprises three kinds of phases of cordierite, mullite, and sapphirine as crystal phases is characterized in that, with a sum of contents of MgO, Al₂O₃, and SiO₂ being 100 mass%, it contains MgO of not less than 12 mass% and 14 mass% or less, Al₂O₃ of not less than 34 mass% and 39 mass% or less, and SiO₂ of not less than 47 mass% and 51 mass% or less, and a content of a substance except MgO, Al₂O₃, and SiO₂ is less than 1.5 mass% of the whole sintered compact.

## Description

The present invention relates to an oxide ceramics sintered compact, and particularly, to an oxide ceramics sintered compact suitable as a member for a semiconductor manufacturing apparatus and a method of manufacturing the same.

A cordierite sintered compact whose main component is cordierite has been conventionally known as low thermal expansion ceramics and is used as a filter, a honeycomb, a refractory, a precision instrument member, and the like.

In recent years, as LSI (Large-Scale Integrated circuit) has become more highly integrated, the miniaturization of the circuit is rapidly progressing, and accordingly higher precision is required of precision manufacturing machines and precision measuring machines used for semiconductor manufacture. Especially in a member of a stepper or the like for forming high-precision circuits on a silicon wafer, a size change in accordance with a slight temperature change and deterioration in exposure accuracy ascribable to vibration occurring when the member stops immediately after high-speed movement have become problems. Therefore, low thermal expansion, high rigidity, low density, and high level of specific rigidity, which is a value equal to rigidity divided by density, are very important in members forming the aforesaid manufacturing machines and measuring machines.

As a low-expansion material for semiconductor manufacturing apparatuses, ceramics such as alumina, silicon carbide, and silicon nitride have been conventionally used, but these ceramics all have a coefficient of thermal expansion of 1.0 × 10⁻⁶/°C or higher at around room temperature and cannot be satisfactory for use in a process requiring high positioning accuracy such as semiconductor exposure.

On the other hand, a cordierite sintered compact is excellent because its density is low and its coefficient of thermal expansion is sufficiently low compared with alumina and silicon nitride, but has a problem that its rigidity is not high enough to suppress the vibration occurring immediately after the high-speed movement of a member in a semiconductor stepper or the like.

Under such circumstances, in order to improve rigidity of a cordierite sintered compact, some attempts have been conventionally made to compound a sub-crystal having high rigidity with a dense cordierite sintered compact. As the sub-crystal compounded with a main crystal of cordierite, an oxide of a rare earth element has been known, but since specific gravity (density) and a coefficient of thermal expansion of this oxide are high, the cordierite sintered compact whose sub-crystal is the rare earth element oxide is not preferable for use in precision instruments such as a semiconductor stepper or the like.

As a sub-crystal having a low specific gravity and capable of improving rigidity of cordierite, an alumina crystal has been proposed (refer to, for example, Reference JP-A 2010-173878 (KOKAI)). However, in a cordierite sintered compact described in JP-A 2010-173878 (KOKAI), part of alumina reacts with cordierite during sintering and a sub-crystal having a high coefficient of thermal expansion is sometimes produced. Therefore, it has been difficult to perform the control so that a sintered compact with a low coefficient of thermal expansion whose main crystal is cordierite and whose sub-crystal is alumina is manufactured with good reproducibility. As a sub-crystal compounded with cordierite, there has been a demand for one that exists with cordierite thermodynamically stably at high temperatures.

There has been proposed a sintered compact containing cordierite as a main crystal and containing, as a sub-crystal, mullite which is low in density and low in thermal expansion and stably exists with cordierite even at high temperatures (refer to, for example, JP-A 2003-292372 (KOKAI)). In this sintered compact, rigidity and specific rigidity are improved by dispersing mullite as the sub-crystal in cordierite. However, in the sintered compact presented in JP-A 2003-292372 (KOKAI), in proportion to an amount of mullite added, the rigidity increases but at the same time a coefficient of thermal expansion also increases. This poses a limit in improving specific rigidity of the cordierite sintered compact while maintaining a low coefficient of thermal expansion, and it has been difficult to realize specific rigidity over 56.6 GPa/g/cm³ (= 56.6 × 10⁶m²/s²). As described above, in the sintered compact in JP-A 2003-292372 (KOKAI), it has not been possible to obtain rigidity and specific rigidity high enough to suppress the vibration of a precision member of a semiconductor stepper or the like.

Further, in the sintered compact in which mullite is dispersed as the sub-crystal in cordierite, there is a possibility that a spinel phase, a glass phase, or a cristobalite phase precipitates as described in paragraph [0008] of JP-A 2003-292372 (KOKAI), and thermodynamic stability of the contained crystal phases is insufficient.

Reference 1: JP-A 2010-173878 (KOKAI)
Reference 2: JP-A 2003-292372 (KOKAI)

The present invention was made to solve the aforesaid problems and has an object to provide an oxide ceramics sintered compact having a low coefficient of thermal expansion and high rigidity (Young's modulus) and being low in density and high in specific rigidity.

The present invention is an oxide ceramics sintered compact comprising three kinds of phases of cordierite, mullite, and sapphirine as crystal phases, characterized in that, with a sum of contents of MgO, Al₂O₃, and SiO₂ being 100 mass%, the oxide ceramics sintered compact contains MgO of not less than 12 mass% and 14 mass% or less, Al₂O₃ of not less than 34 mass% and 39 mass% or less, and SiO₂ of not less than 47 mass% and 51 mass% or less, and a content of a substance except MgO, Al₂O₃,and SiO₂ is less than 1.5 mass% of the whole sintered compact.

In the oxide ceramics sintered compact of the present invention, the cordierite is preferably a main crystal. Further, in the oxide ceramics sintered compact of the present invention, it is preferable that a coefficient of thermal expansion at 21 °C to 23 °C is not less than -0.2 × 10⁻⁶/°C and 0.2 × 10⁻⁶/°C or less and a Young's modulus is 144 GPa or more. Further, the coefficient of thermal expansion at 21°C to 23 °C is more preferably not less than -0.02 × 10⁻⁶/°C and 0.02 × 10⁻⁶/°C or less, and is still more preferably not less than -0.005 × 10⁻⁶/°C and 0.005 × 10⁻⁶/°C or less. Further, it is preferable that the Young's modulus is 144 GPa or more, bending strength is 200 MPa or more, and a Weibull parameter of the bending strength is 12 or more. Further preferably, specific rigidity is 57.0 × 10⁶m²/s² or more. The oxide ceramics sintered compact of the present invention is usable as a member for a semiconductor manufacturing apparatus.

A method according to the present invention is a method of manufacturing an oxide ceramics sintered compact which includes three kinds of crystal phases of cordierite, mullite, and sapphirine and whose coefficient of thermal expansion at 21°C to 23°C is not less than -0.005 × 10⁻⁶/°C and 0.005 × 10⁻⁶/°C or less and whose Young's modulus is 144 GPa or more, characterized in that a mixed powder of a cordierite powder, a mullite powder, and a magnesia powder is used as a raw material powder.

In the method of manufacturing the oxide ceramics sintered compact according to the present invention, the cordierite powder is preferably one manufactured by an electrofusion method.

The oxide ceramics sintered compact of the present invention has a coefficient of thermal expansion that is very close to 0 (zero) at around room temperature, and in addition has low density, high rigidity, and high specific rigidity. Therefore, using this oxide ceramics sintered compact as a member of a precision instrument in a semiconductor exposure process or the like makes it possible to suppress a size change of the member in accordance with a temperature change at around room temperature and the vibration of the member occurring when the member stops immediately after the high-speed movement and improve productivity and measuring accuracy of a semiconductor device.

Further, the oxide ceramics sintered compact of the the present invention includes the three kinds of crystal phases of cordierite, mullite, and sapphirine, and there occurs almost no precipitation of the glass phase which will be a cause of a variation in the coefficient of thermal expansion. The precipitation of the glass phase might cause a slight change of the coefficient of thermal expansion in a cooling process during the baking in the manufacture because a precipitation amount of the glass phase differs due to a difference in, for instance, a cooling rate or the like, but in the present invention, because there occurs almost no precipitation of the glass phase, it is possible to stably realize a coefficient of thermal expansion that is very close to 0 (zero).

According to the manufacturing method of the present invention, it is possible to obtain an oxide ceramics sintered compact whose coefficient of thermal expansion at around room temperature is very close to 0 (zero) and which has low density, high rigidity, and high specific rigidity, as described above.

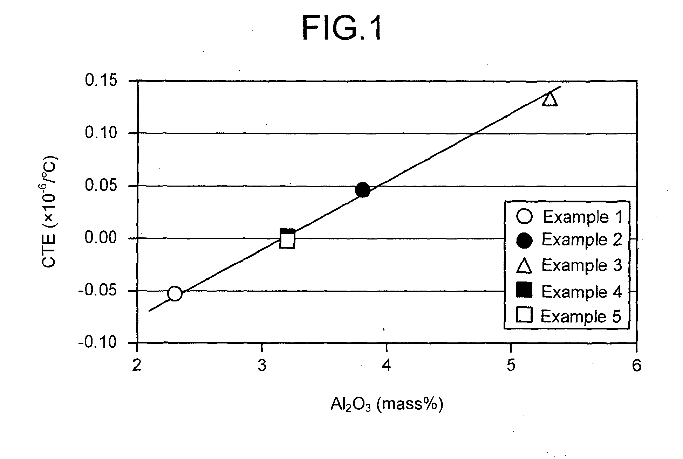

Fig. 1 is a graph showing a correlation between an addition amount of alumina in a raw material powder and a coefficient of thermal expansion (CTE) in examples 1 to 5.

Hereinafter, an embodiment of the present invention will be described in detail. An oxide ceramics sintered compact of the embodiment of the present invention includes, as crystal phases, three kinds of phases of cordierite represented by a formula: 2MgO•2Al₂O₃•5SiO₂, mullite represented by a formula: 3Al₂O₃•2SiO₂, and sapphirine represented by a formula: 4MgO•4Al₂O₃•2SiO₂. The oxide ceramics sintered compact preferably is composed of the three phases of cordierite, mullite, and sapphirine and preferably does not include other crystal phases. Further preferably, cordierite is a main crystal and mullite and sapphirine are sub-crystals.

The crystal phases can be confirmed through the identification with the use of an X-ray diffractometer. In the present invention, when a peak intensity ratio (Im/Ic) is 0.001 or more, with Im being intensity at a main peak (2θ = 30.7 to 31.3°) of mullite and Ic being intensity at a main peak (2θ = 28.3 to 29.0°) of cordierite, as measured by, for example, an X-ray diffractometer using a Kα ray of Cu, it is said that the mullite phase exists. Similarly, when a ratio (Is/Ic) of peak intensity is 0.001 or more, with Is being intensity at a main peak (2θ = 27.0 to 27.5°) of sapphirine and Ic being intensity at a main peak (2θ = 28.3 to 29.0°) of cordierite, as measured by an X-ray diffractometer using a Kα ray of Cu, it is said that the sapphirine phase exists.

The oxide ceramics sintered compact of the present invention has a chemical composition in which, with a sum of the contents of MgO, Al₂O₃, and SiO₂ being 100 mass%, MgO of not less than 12 mass% and 14 mass% or less, Al₂O₃ of not less than 34 mass% and 39 mass% or less, and SiO₂ of not less than 47 mass% and 51 mass% or less are contained and the content of substances except MgO, Al₂O₃,and SiO₂ is less than 1.5 mass% of the whole sintered compact. Note that the values in the aforesaid chemical composition are measured by a fluorescent X-ray analysis method regarding a sample prepared by, for example, a glass bead method. Hereinafter, a method in which a sample is prepared by the glass bead method and this sample is subjected to fluorescent X-ray analysis will be called a glass bead fluorescent X-ray analysis method.

Preferably, chemical components contained in the oxide ceramics sintered compact of the present invention are substantially MgO, Al₂O₃, and SiO₂ which are the same chemical components as those of cordierite so that a precipitated crystal phase does not become complicated and is a crystal phase that is as simple as possible and thermodynamically stable. Note that the aforesaid "substantially" means that the total content of the components MgO, Al₂O₃, and SiO₂ except impurities contained in a raw material or impurities unintentionally mixed in manufacturing processes is 99.9 mass% or more of the whole sintered compact.

A reason why the chemical composition of the oxide ceramics sintered compact is limited to the above range is that if the chemical composition falls out of this range, it is not possible to obtain a ceramics sintered compact having a coefficient of thermal expansion whose value is very close to 0 (zero) and high rigidity (Young's modulus) and being high in specific rigidity.

In the oxide ceramics sintered compact of the embodiment of the present invention, while cordierite low in thermal expansion and having a negative coefficient of thermal expansion is the main crystal, predetermined amounts of mullite and sapphirine each having a positive coefficient of thermal expansion are contained as the sub-crystals, and the adjustment is made so that the oxide ceramics sintered compact has the aforesaid chemical composition, whereby it is possible to adjust the coefficient of thermal expansion at around room temperature to a value very close to 0 (zero). Concretely, it is possible to control a coefficient of thermal expansion at 21°C to 23°C to not less than -0.2 × 10⁻⁶/°C and 0.2 × 10⁻⁶/°C or less, more preferably not less than -0.02 × 10⁻⁶/°C and 0.02 × 10-⁶/°C or less, and still more preferably not less than -0.005 × 10⁻⁶/°C and 0.005 × 10⁻⁶/°C or less.

In order to thus control the coefficient of thermal expansion to a very narrow range, the use of crystals that have high thermodynamic stability is preferable. In the present invention, by including the three phases of cordierite, mullite, and sapphirine which are crystals having high thermodynamic stability, it is possible to realize the control of the coefficient of thermal expansion to the aforesaid very narrow range. Here, the value of the coefficient of thermal expansion can be measured by using, for example, a laser heterodyne interference thermodilatometer.

Further, in the oxide ceramics sintered compact of the embodiment, in addition to cordierite whose Young's modulus in a compact is about 140 GPa, appropriate amounts ofmullite and sapphirine whose Young's moduli are higher are contained as the sub-crystals, which can further increase the Young's modulus, concretely, to 144 GPa or more. Note that the Young's modulus is a value measured by an ultrasonic pulse method stipulated in JIS R1602 (1995).

In the oxide ceramics sintered compact of the embodiment, specific rigidity can be 56.5 × 10⁶m²/s² or more. By setting the specific rigidity of the ceramics sintered compact to 56.5 × 10⁶m²/s² or more, it is possible to effectively suppress the vibration occurring when a member stops immediately after the high-speed movement. The specific rigidity is more preferably 57.0 × 10⁶m²/s² or more. By setting the specific rigidity to 57.0 × 10⁶m²/s² or more, it is possible to further reduce the vibration of the member. The specific rigidity is a value calculated by dividing the Young's modulus by bulk density. Note that the bulk density is a value measured by an Archimedes method stipulated in JIS R1634 (1998).

Furthermore, in the oxide ceramics sintered compact of the embodiment, open porosity is set to less than 0.1 vol%, whereby the density can be increased. The open porosity of the oxide ceramics sintered compact is more preferably 0.09 vol% or less. As the open porosity becomes lower, strength and a dielectric breakdown property more improve, and it becomes a preferable one as, for example, a dielectric electrode or a member for a semiconductor manufacturing apparatus. The open porosity can be found by the Archimedes method.

According to the oxide ceramics sintered compact of the embodiment, it is possible to achieve a highly reliable sintered compact having high bending strength and having a high Weibull parameter of the bending strength. The Weibull parameter is an index indicating a variation degree of the strength, and the higher the Weibull parameter, the smaller the variation.

Preferably, the bending strength is 165 MPa or more and its Weibull parameter is 9 or more. The higher the bending strength, the more preferable. Especially when the Weibull parameter is high, in the application to a product such as a stepper stage, variation in bending strength in one product or among products becomes small and reliability is high. More preferably, the bending strength is 180 MPa or more and the Weibull parameter of the bending strength is 11 or more. Especially preferably, the bending strength is 200 MPa or more and the Weibull parameter is 12 or more. The bending strength can be found by room-temperature bending strength testing method stipulated in JIS R1601 (2008). Further, the Weibull parameter can be found by a Weibull statistical analysis method of strength data stipulated in JIS R1625 (2010).

In the oxide ceramics sintered compact of the embodiment of the present invention, it is possible to control the coefficient of thermal expansion at around room temperature to a value close to substantially 0 (zero) (-0.005 × 10⁻⁶/°C nor more than 0.005 × 10⁻⁶/°C), and it is possible to sufficiently increase specific rigidity (= Young's modulus/bulk density). Therefore, when this oxide ceramics sintered compact is used as, for example, a member for a stepper in the semiconductor manufacture, a size variation in accordance with a change in ambient temperature is small and excellent accuracy is obtained, and moreover, deterioration in accuracy in accordance with the vibration can be prevented and quality and mass productivity of semiconductor elements can be enhanced. That is, since the oxide ceramics sintered compact is excellent in suppression performance of vibration accompanying the high-speed movement and stop of the stage and improves exposure accuracy and throughput, it can be suitably used as, for example, a member such as a stage of a semiconductor stepper which has a silicon wafer mounted thereon and moves at high speed up to a position where the exposure process is applied.

Next, a method of manufacturing the oxide ceramics sintered compact of the embodiment of the present invention will be described. To manufacture the oxide ceramics sintered compact of the embodiment, a cordierite (2MgO•2Al₂O₃•5SiO₂) powder, an alumina (Al₂O₃) powder, a mullite (3Al₂O₃•2SiO₂) powder, and a magnesia (MgO) powder are first prepared as raw material powders. As the cordierite powder, a commercially available cordierite powder manufactured by an electrofusion method is usable, for instance. Being good in sinterability and homogeneous, the cordierite powder manufactured by the electrofusion method is preferable as the raw material powder of the present invention.

Then, among these raw material powders, for example, the cordierite powder and the alumina powder are combined or the cordierite powder, the mullite powder, and the magnesia powder are combined to be mixed. As the combination of the raw material powders, the combination of the cordierite powder, the mullite powder, and the magnesia powder is preferable because it realizes high strength and a high Weibull parameter. This combination can make an amount of solid-phase reaction smaller than the other combinations and can suppress particle growth during the sintering, which makes it possible to make particles of the sintered compact relatively small.

In mixing the raw material powders, they are weighed and mixed at a predetermined ratio so that the obtained sintered compact has a chemical composition in which MgO is 12 to 14 mass%, Al₂O₃ is 34 to 39 mass%, SiO₂ is 47 to 51 mass%, and the total content of MgO, Al₂O₃ and SiO₂ is 100 mass%. Note that the raw material powders are not particularly limited provided that the sintered compact comes to have the aforesaid chemical composition, and powders of any inorganic compound may be used.

In any of the combinations of the aforesaid raw material powders, it is preferable that appropriate sintering temperature and retention time are selected for the sintering so that the sintered compact has three phases of cordierite, mullite, and sapphirine as the crystal phases. Further, especially when the cordierite powder and the alumina powder are combined as the raw material powders, it is desirable that an alumina phase not having undergone the reaction does not remain. If the alumina phase remains as a crystal phase in the sintered compact, a coefficient of thermal expansion might fall out of a desired range due to a difficulty in accurately controlling a residual amount of the alumina phase. The weighed mixed raw material is wet-ground until its average particle size (D50) becomes 10 µm or less, preferably 2 µm or less, and then is dried, in order to have a good sintering property. Thus smallness of the average particle size of the cordierite powder makes it possible for the sintered compact to have high strength and a dense quality. Note that this average particle size is a value measured by a laser diffraction method.

A grinding method is not particularly limited and for example, a ball mill, an attritor, a beads mill, a jet mill, or the like may be used for grinding. At this time, the grinding is performed under a condition capable of making the average particle size smaller than a normal condition. For example, when the ball mill is used, by making used balls small and selecting appropriate viscosity and processing time, it is possible to obtain a powder with a smaller average particle size. Incidentally, a natural cordierite may be ground.

Next, the obtained mixed powder of the cordierite powder and the alumina powder, or the mixed powder of the cordierite powder, the mullite powder, and the magnesia powder is molded into a predetermined shape. A molding method is not particularly limited and an ordinary molding method is usable. For example, the molding can be done by the application of a pressing force of not less than 100 MPa and 200 MPa or less by isostatic pressing. Another possible method is to knead a mixture in which an organic binder is added to the mixed powder and mold the mixture into the predetermined shape by press molding, extrusion molding, sheet molding, or the like. The shape obtained as a result of the molding is not particularly limited either, and any of various shapes may be adopted according to the use. For example, the shape may be a plate shape such as a disk shape.

Next, the obtained compact is baked by being heated in the atmosphere at a temperature of not lower than 1400°C nor higher than 1450°C for one hour to 48 hours. When the cordierite powder and the alumina powder are used as the raw material powders of the sintered compact of the present invention as described above, in order to prevent alumina from remaining so that only cordierite, mullite, and sapphirine become the crystal phases, it is preferable that the average particle size of the raw material is set to 2 µm or less and the baking is performed by five-hour heating or longer at a temperature of 1430°C or higher.

When the baking temperature is too low, the particles of the powder are not sufficiently sintered and sufficient strength cannot be obtained. On the other hand, too high a baking temperature increases a possibility of the occurrence of problems such as melting of part of the sintered compact, a breakage of the sintered compact, inability to obtain the sintered compact with a desired size. Further, when the cordierite powder, the mullite powder, and the magnesia powder are used as the raw material powders, only the three phases of cordierite, mullite, and sapphirine can be more easily included as the crystal phases than when the cordierite powder and the alumina powder are used as the raw material powders. It is preferable that the average particle size of the raw material is set to 2 µm or less, the baking temperature is set to a temperature of 1410°C to 1440°C, and the baking is performed by one-hour heating or longer.

The retention time at the maximum temperature is not particularly limited but is, for example, one hour to twelve hours, more preferably, two to eight hours. A baking atmosphere is not particularly limited either and, for example, an air atmosphere, an inert atmosphere such as a nitrogen or argon atmosphere, or a reducing atmosphere such as a hydrogen or a hydrogen-nitride mixed atmosphere is selectable.

In this manner, the cordierite sintered compact of the embodiment of the present invention can be obtained. Thereafter, this sintered compact is preferably more densified. The densification can be performed by, for example, hot isostatic pressing. Concretely, by heating at a temperature of not lower than 1000°C and 1350°C or lower while applying a pressing force of not less than 100 MPa nor more than 200 MPa by hot isostatic pressing, it is possible to more densify the sintered compact.

Hereinafter, examples of the present invention will be described but the present invention is not limited to the following examples.

### Examples 1 to 5, Comparative Examples 1, 2

### <Manufacturing of Ceramics Sintered Compact>

In examples 1 to 3 and an example 5, an alumina powder (manufactured by Sumitomo Chemical Co., Ltd; AKP50) with a 0.2 µm average particle size was added to a cordierite powder (manufactured by AGC Ceramics Co., Ltd.; ELP-150FINE, average particle size 14.1 µm) manufactured by an electrofusion method so that the raw material powder composition became that shown in Table 1. In an example 4, a mullite powder (manufactured by KCM Corporation; KM101, average particle size 0.8 µm) and a magnesia powder (manufactured by KOJUNDO Chemical Laboratory CO., Ltd; 4NG) were added to the aforesaid cordierite powder so that the raw material powder composition became that shown in Table 1. Further, in comparative examples 1, 2, the aforesaid alumina powder and a clay powder (manufactured by Kentucky-Tennessee Clay Company; #5Clay; average particle size 1.9 µm) were added to the aforesaid cordierite so that the raw material composition became that shown in Table 1. Then, the mixed powders were each subjected to wet mixing and grinding with ethanol used as a dispersion medium by using a ball mill having high-purity alumina balls. When average particle sizes (D50) of the ground raw material powders were measured by a laser scattering method (measuring device; Partica LA-9502 manufactured by HORIBA), values shown in Table 1 were obtained.

After the mixed powders were molded by 180 MPa isostatic pressing at room temperature, the obtained compacts were baked by being heated in the atmosphere at 1450°C for five hours in the examples 1 to 3 and at 1430°C for two hours in the examples 4 and 5. Further, the compacts of the comparative example 1 and the comparative example 2 were baked by being heated at 1410°C for five hours in the former and by being heated at 1410°C for two hours in the latter. Thereafter, obtained sintered compacts were subjected to hot isostatic pressing with a 145 MPa pressing force at 1300°C to be densified.

Chemical compositions of the sintered compacts obtained through the above processes were measured by the glass bead fluorescent X-ray analysis method. Table 1 shows the compositions of the raw material powders (the total mass of cordierite, alumina, clay, mullite, and magnesia is 100%), the average particle size (D50) of each of the ground raw material powders, the baking temperature, and results of chemical composition analysis by the fluorescent X-ray analysis of the sintered compacts. The results of the fluorescent X-ray analysis show ratios (mass%) of SiO₂, Al₂O₃, and MgO, with the total content of SiO₂, Al₂O₃, and MgO being 100 mass%. Note that in the obtained sintered compacts, the total content of substances except the three components SiO₂ Al₂O₃, and MgO was less than 1.5 mass% of the whole sintered compacts.

**[Table 1]**

| | Raw Material Powder (mass%) | | | | | Average Particle Size (µm) | Sintering Temperature (°C) | Result of Fluorescent X-ray Measurement of Sintered Compact (mass%) | | |
|---|---|---|---|---|---|---|---|---|---|---|
| | Cordierite | Alumina | Clay | Mullite | Magnesia | | | SiO₂ | Al₂O₃ | MgO |
| Example 1 | 97.7 | 2.3 | 0 | 0 | 0 | 8.4 | 1450 | 49.8 | 36.3 | 13.9 |
| Example 2 | 96.2 | 3.8 | 0 | 0 | 0 | 8.2 | 1450 | 49.6 | 36.7 | 13.7 |
| Example 3 | 94.7 | 5.3 | 0 | 0 | 0 | 9.1 | 1450 | 48.4 | 38.1 | 13.5 |
| Example 4 | 93.6 | 0 | 0 | 5.9 | 0.5 | 1.8 | 1430 | 49.6 | 36.6 | 13.8 |
| Example 5 | 96.8 | 3.2 | 0 | 0 | 0 | 1.8 | 1430 | 49.6 | 36.6 | 13.8 |
| Comparative Example 1 | 87.4 | 3.9 | 8.7 | 0 | 0 | 9.0 | 1410 | 50.5 | 36.9 | 12.6 |
| Comparative Example 2 | 87.4 | 3.9 | 8.7 | 0 | 0 | 1.5 | 1410 | 50.5 | 36.9 | 12.6 |

Further, regarding the ceramics sintered compacts obtained in the examples I to 5 and the comparative examples 1 and 2, constituent crystal phases were examined in the following manner. Further, physical properties (Young's modulus, bulk density, open porosity, specific rigidity, coefficient of thermal expansion, bending strength, and Weibull parameter of bending strength) of the ceramics sintered compacts were measured in the following manners respectively. These results are shown in Table 2.

### <Measurement/Evaluation Method of Physical Properties and so on)

### (a) Crystal Phase

To confirm the crystal phases, crystals were identified by an X-ray diffractometer (manufactured by Rigaku Corporation, apparatus name; RINT2500). For the measurement, a CuKα ray was used, and voltage and current were set to 40 kV and 200 mA respectively. Then, when a ratio of intensity Is at a peak (27.0° ≤ 2θ ≤ 27.5°) of a sapphirine phase and intensity Ic at a peak (28.3° ≤ 2θ ≤ 29.0°) of a cordierite phase was 0.001 or more (Is/Ic ≥0.001) in each of obtained X-ray spectrums, the presence of the sapphirine phase was determined. The mullite phase was also confirmed in the same manner. That is, when a ratio of intensity Im at a peak (30.7° ≤ 2θ ≤ 31.3°) of a mullite phase and the peak intensity Ic of the cordierite phase was 0.001 or more (Im/Ic ≥0.001), the presence of the mullite phase was determined.

### (b) Young's Modulus

The Young's modulus of each of the ceramics sintered compacts was measured by the ultrasonic pulse method stipulated in JIS R1602 (1995).

### (c) Bulk Density and Open Porosity

The bulk density and the open porosity of each of the ceramics sintered compacts were measured by the Archimedes method stipulated in JIS R1634 (1998).

### (d) Specific Rigidity

The specific rigidity of each of the ceramics sintered compacts was calculated by dividing (b) Young's modulus by (c) bulk density, both of which were found by the above-described methods.

### (e) Coefficient of Thermal Expansion

The coefficient of thermal expansion of each of the ceramics sintered compacts at 21 °C to 23 °C was measured by using a laser heterodyne interference thermodilatometer (manufactured by Uniopt Corporation, Ltd., apparatus name; CTE-01).

### (f) Bending strength

For the bending strength of each of the ceramics sintered compacts, four-point bending strength was measured by the method stipulated in JIS R1601 (2008). As a testing jig, one whose outer fulcrum distance was 30 mm and whose inner fulcrum distance was 10 mm was used.

### (g) Weibull parameter

The Weibull parameter of each of the ceramics sintered compacts was calculated based on the measurement result of the bending strength by using the method stipulated in JIS R1625 (2010). The number N of test pieces was 30.

**[Table 2]**

| | Crystal Phase | Young's Modulus (GPa) | Bulk Density (g/cm³) | Open Porosity (%) | Specific Rigidity (m² · S⁻²) | Coefficient of Thermal Expansion (/°C) | Bending Strength (MPa) | Weibull Parameter |
|---|---|---|---|---|---|---|---|---|
| Example 1 | Cordierite Mullite Sapphirine | 144 | 2.54 | 0.07 | 56.7×10⁶ | -0.053×10⁻⁶ | 180 | 11.2 |
| Example 2 | | 146 | 2.55 | 0.09 | 57.3×10⁶ | 0.046×10⁻⁶ | 182 | 10.3 |
| Example 3 | | 147 | 2.57 | 0.09 | 57.2×10⁶ | 0.133×10⁻⁶ | 169 | 9.6 |
| Example 4 | | 147 | 2.55 | 0.09 | 57.5×10⁶ | 0.002×10⁻⁶ | 232 | 13.8 |
| Example 5 | | 147 | 2.54 | 0.09 | 57.8×10⁶ | -0.002×10⁻⁶ | 224 | 12.7 |
| Comparative Example 1 | Cordierite Mullite | 143 | 2.56 | 0.15 | 55.9×10⁶ | 0.013×10⁻⁶ | 192 | 7.4 |
| Comparative Example 2 | | 143 | 2.56 | 0.13 | 55.9×10⁶ | 0.017×10⁻⁶ | 198 | 8.0 |

From Table 2, the following is found out. Specifically, in the examples 1 to 5, mullite and sapphirine were contained in cordierite to make the crystal phases, whereby it was possible to obtain the sintered compacts each having high Young's modulus and specific rigidity while having a coefficient of thermal expansion that was adjusted to a range of a low coefficient of thermal expansion (not less than -0.2 × 10⁻⁶/°C and 0.2 × 10⁻⁶/°C or less) close to that of cordierite.

Regarding the examples 1 to 5, a graph was created which shows a correlation between the mass ratio of alumina (Al₂O₃) to the total mass of the raw material powders, which is shown in Table 1, and the coefficient of thermal expansion of each of the sintered compacts shown in Table 2 (hereinafter, referred to as an Al₂O₃-CTE correlation graph). This graph is shown in Fig. 1. Incidentally, in the example 4, since an alumina powder was not used as the raw material powder, an amount of alumina was found from a composition analysis table of the added mullite powder, and a ratio calculated based on this value was shown in Fig. 1.

As shown in Fig. 1, it was found out that, in the oxide ceramics sintered compact of the present invention, around 0 (zero) of coefficient of thermal expansion, the coefficient of thermal expansion linearly changes (increases) in correlation with the content (content ratio) of alumina. Therefore, in the oxide ceramics sintered compact of the present invention, it is easy to control the coefficient of thermal expansion highly accurately.

A reason why the coefficient of thermal expansion thus linearly changes in correlation with the alumina content is that the oxide ceramics sintered compact of the present invention is composed substantially of the three phases of cordierite, mullite, and sapphirine which are stable crystal phases. In the examples 4 and 5, as the coefficient of thermal expansion, 0.002 × 10⁻⁶/°C and -0.002 × 10⁻⁶/°C which are very close to 0 (zero) were obtained respectively, and this is a result obtained in such a manner that the alumina content at which the coefficient of thermal expansion (CTE) became 0 (zero) was calculated from the Al₂O₃-CTE correlation graph created for the examples 1 to 3 and the raw material powder was prepared so that the alumina content matched this value.

In the examples 4 and 5, high values of the bending strength and the Weibull parameter of that, the former being 200 MPa or more and the latter being 12 or more was obtained. Especially in the example 4 where the cordierite powder, the mullite powder, and the magnesia powder were used as the raw material powders, 230 MPa or more and 13 or more were obtained as the bending strength and the Weibull parameter respectively.

Further, as is seen from Table 2, in the examples 1 to 5, the sintered compacts each having the specific rigidity of 56.5 × 10⁶m²/s² or more were obtained, and especially in the examples 2 to 5, the sintered compacts each having the specific rigidity of 57.0 × 10⁶m²/s² or more were obtained.

On the other hand, in the sintered compacts of the comparative examples 1 and 2, as the crystal phases, cordierite and mullite were contained and sapphirine is not contained, and therefore, though they each had the coefficient of thermal expansion very close to 0 (zero), the Young's modulus and the specific rigidity were lower than those of the sintered compacts of the examples 1 to 5. Therefore, when they are used as a member for a semiconductor manufacturing apparatus, they are not able to achieve sufficient vibration suppression performance. Further, in the results of the sintered compacts of the comparative examples 1 and 2, the Weibull parameter of the bending strength was a low value of less than 9, and variation in strength was large, and thus reliability was not high.

### Example 6, Comparative Example 3

### <Stability of Ceramics Sintered Compact>

In an example 6, a ceramics sintered compact was manufactured in the same manner as in the example 4 except that a cooling rate of the retention temperature from 1430°C to 1000°C during the baking was changed as shown in Table 3. Further, in a comparative example 3, a ceramics sintered compact was manufactured in the same manner as in the comparative example 2 except that a cooling rate of the retention temperature from 1410°C to 1000°C during the baking was changed as shown in Table 3. Regarding each of the ceramics sintered compacts obtained in the example 6 and the comparative example 3, crystal phases, the aforesaid cooling rate, and a coefficient of thermal expansion at 21°C to 23°C are shown in Table 3 together with those in the example 4 and the comparative example 2.

**[Table 3]**

| | Crystal Phase | Cooling Rate (°C/minute) | Coefficient of Thermal Expansion (/°C) |
|---|---|---|---|
| Example 4 | Cordierite Mullite Sapphirine | 12 | 0.002×10⁻⁶ |
| Example 6 | | 5 | 0.001×10⁻⁶ |
| Comparative Example 2 | Cordierite Mullite | 12 | 0.017×10⁻⁶ |
| Comparative Example 3 | | 5 | 0.026×10⁻⁶ |

It has been found out from Table 3 that the ceramics sintered compacts of the example 4 and the example 6 have substantially the same coefficient of thermal expansion irrespective of the difference in the cooling rate. On the other hand, in the ceramics sintered compacts of the comparative example 2 and the comparative example 3, a great difference occurred in the coefficient of thermal expansion due to the difference in the cooling rate. It is seen from this result that the ceramics sintered compact of the present invention has high stability in terms of the coefficient of thermal expansion.

According to the present invention, it is possible to obtain an oxide ceramics sintered compact whose coefficient of thermal expansion at around room temperature is very close to 0 (zero) and in addition which has low density, high rigidity, and high specific rigidity. The use of this oxide ceramics sintered compact as a member of a precision instrument in a semiconductor exposure process or the like makes it possible to suppress a size change of the member in accordance with a temperature change near room temperature and the vibration of the member occurring when the member stops immediately after the high-speed movement and to improve productivity of a semiconductor device and measurement accuracy. Further, by the manufacturing method of the present invention, it is possible to obtain the above-described oxide ceramics sintered compact having high stability and reliability.

## Claims

1. An oxide ceramics sintered compact comprising three kinds of phases of cordierite, mullite, and sapphirine as crystal phases, **characterized in that**, with a sum of contents of MgO, Al₂O₃, and SiO₂ being 100 mass%, the oxide ceramics sintered compact contains MgO of not less than 12 mass% and 14 mass% or less, Al₂O₃ of not less than 34 mass% and 39 mass% or less, and SiO₂ of not less than 47 mass% and 51 mass% or less, and a content of a substance except MgO, Al₂O₃,and SiO₂ is less than 1.5 mass% of the whole sintered compact.

2. The oxide ceramics sintered compact according to claim 1, **characterized in that** the cordierite is a main crystal.

3. The oxide ceramics sintered compact according to claim 1 or 2, **characterized in that** a coefficient of thermal expansion at 21°C to 23 °C is not less than -0.2 × 10⁻⁶/°C and 0.2 × 10⁻⁶/°C or less and a Young's modulus is 144 GPa or more.

4. The oxide ceramics sintered compact according to claim 3, **characterized in that** the coefficient of thermal expansion at 21°C to 23°C is not less than -0.02 × 10⁻⁶/°C and 0.02 × 10⁻⁶/°C or less.

5. The oxide ceramics sintered compact according to claim 4, **characterized in that** the Young's modulus is 144 GPa or more, bending strength is 200 MPa or more, and a Weibull parameter of the bending strength is 12 or more.

6. The oxide ceramics sintered compact according to claim 4 or 5, **characterized in that** the coefficient of thermal expansion at 21°C to 23 °C is not less than -0.005 × 10⁻⁶/°C and 0.005 × 10⁻⁶/°C or less.

7. The oxide ceramics sintered compact according to any one of claims 1 to 6, **characterized in that** specific rigidity is 57.0 × 10⁶m²/s² or more.

8. The oxide ceramics sintered compact according to any one of claims 1 to 7, **characterized in that** the oxide ceramics sintered compact is a member for a semiconductor manufacturing apparatus.

9. A method of manufacturing an oxide ceramics sintered compact which comprises three kinds of crystal phases of cordierite, mullite, and sapphirine and whose coefficient of thermal expansion at 21°C to 23 °C is not less than -0.005 × 10⁻⁶/°C and 0.005 × 10⁻⁶/°C or less and whose Young's modulus is 144 Gpa or more, **characterized in that** a mixed powder of a cordierite powder, a mullite powder, and a magnesia powder is used as a raw material powder.

10. The method of manufacturing the oxide ceramics sintered compact according to claim 9, **characterized in that** the cordierite powder is manufactured by an electrofusion method.
